# DEMANDE DE BREVET EUROPEEN

(11) **EP 3 023 000 A1**
(43) Date de publication de la demande: **25.05.2016**
(21) Numéro de dépôt: 15194780.1
(22) Date de dépôt: 16.11.2015
(51) Int. Cl.: A01D 41/12, A01F 15/04

(54) **PROCÉDÉ ET APPAREIL DE CONDITIONNEMENT DE MATIÈRE FRAGMENTÉE TELLE QUE DE LA MENUE PAILLE**

(30) Priorité: 19.11.2014 FR 1461178
(71) Demandeur: PERARD, 55100 Verdun (FR)
(72) Inventeur: PERARD, Patrick, 55100 VERDUN (FR); DELMAS, Boris, 55100 VERDUN (FR)
(74) Mandataire: Novagraaf Technologies

(57) **Abrégé**

Selon un procédé de conditionnement de menue paille et avec un appareil selon l'invention, on effectue les étapes suivantes :
• réception de la menue paille depuis une moissonneuse-batteuse (1) ;
• compression de la menue paille dans un tube de compression (211) ;
• extraction hors du tube d'un boudin (3) formé par la menue paille comprimée dans une direction d'extraction ;
• déroulement d'un film (4) continu tout autour du boudin (3) pendant son extraction ;
• réception du boudin (3) filmé sur un berceau (23) ;
• séparation périodique du boudin (3) en botte (30) par la translation du berceau (23) ;
• serrement du film (4) entre la botte (30) séparée et l'avant du boudin (3), et
• réalisation de deux liaisons sur le film (4) et sectionnement du film (4) entre les deux liaisons.

## Description

### Domaine technique

La présente invention se rapporte à un procédé de conditionnement de matière fragmentée telle que de la menue paille. Elle concerne également un appareil mettant en oeuvre ledit procédé.

### Etat de la technique

Les moissonneuses-batteuses actuelles permettent de couper les cultures de céréales, de séparer les grains du reste de la plante de manière à stocker le grain dans un réservoir et à éjecter le reste à l'arrière. Les résidus sont formés essentiellement de paille, c'est-à-dire des tiges des plantes. Une autre partie des résidus est formée des éléments très légers tels que les enveloppes des grains, des feuilles, des débris de paille et des graines de plantes adventices. Ces éléments sont séparés des grains par soufflage et sont appelés la menue paille.

La plupart des moissonneuses-batteuses sont équipées d'un éparpilleur qui souffle de chaque côté de l'engin pour disperser la menue paille sur le champ.

La menue paille représente cependant une matière valorisable. Par ailleurs, du fait qu'elle contient des graines de plantes non souhaitées susceptibles de dévaloriser la récolte, le champ est ensemencé avec ces graines qui sont dispersées. Il est alors fréquent qu'un traitement de désherbage soit appliqué par la suite pour la récolte suivante.

Il a été proposé par le document US 3,276,451 de verser la menue paille par-dessus l'andain de paille sortant de la moissonneuse-batteuse. Cette solution n'évite la dispersion des graines que si la paille n'a pas besoin d'être retournée pour être séchée. On constate également qu'en cas de vent, une part importante de la menue paille est quand même dispersée. De plus, cette incorporation dans la paille a tendance à diminuer la valeur de celle-ci.

Le document EP 2 073 623 A1 propose d'équiper une moissonneuse-batteuse d'un réservoir à menue paille et d'un système à vis sans fin relevant la menue paille vers le réservoir. Ce système comporte l'inconvénient d'avoir une capacité limitée et nécessitant des arrêts fréquents pour transférer le contenu du réservoir vers une benne ou sur le champ. De plus la menue paille est fournie sans compression, ce qui rend son transport peu efficace.

Le document GB 1908 01448 propose une installation de compression de la menue paille dans un tube par une paire de pistons travaillant en opposition. Le conditionnement est ensuite réaliser entre des plateaux ligaturés. Ce procédé nécessite de fournir et de gérer des plateaux pour le conditionnement, ce qui grève le coût d'exploitation.

L'invention vise à fournir un procédé et un appareil de conditionnement de la menue paille en vue de sa valorisation directement lors de la moisson.

### Description de l'invention

Avec ces objectifs en vue, l'invention a pour objet un procédé de conditionnement de menue paille comportant les étapes suivantes :
- réception de la menue paille depuis une moissonneuse-batteuse ;
- compression de la menue paille dans un tube de compression ;
- extraction hors du tube d'un boudin formé par la menue paille comprimée dans une direction d'extraction ;
- déroulement d'un film continu tout autour du boudin pendant son extraction ;
- réception du boudin filmé sur un berceau ;
- séparation périodique du boudin en botte par la translation du berceau ;
- serrement du film entre la botte séparée et l'avant du boudin,
- réalisation de deux liaisons sur le film et sectionnement du film entre les deux liaisons.

Grâce au procédé, la menue paille est récoltée et conditionnée directement lors de la récolte. Le conditionnement à l'intérieur d'un film garantit une tenue mécanique des bottes ainsi constituées et évite la dispersion de petits éléments depuis sa surface. La compression dans un tube permet d'obtenir une réduction très conséquente du volume, par un facteur supérieur à 15, voire supérieur à 30. Le transport et le stockage de cette matière en est facilité. Par ailleurs, le champ récolté n'est plus ensemencé par les plantes adventices. Ainsi, on prévient l'utilisation d'herbicides pour les récoltes futures.

De manière avantageuse, on comprime la menue paille en deux étages, un premier étage avec une vis sans fin conique, et un deuxième étage par un piston coulissant de manière alternative dans le tube de compression. La menue paille étant initialement très volubile, les efforts nécessaires pour réaliser une première phase de compression ne sont pas très importants et sont facilement fournis par une vis sans fin, même de grand diamètre. Par contre, la compression dans un tube par un piston permet d'atteindre une densité de compression importante à partir de la matière précomprimée par la vis.

L'invention a aussi pour objet un appareil de conditionnement de menue paille, comportant :
- des moyens de réception de la menue paille depuis une moissonneuse-batteuse ;
- des moyens de compression pour comprimer la menue paille dans un tube de compression et l'extraire hors du tube de compression ;
caractérisé en ce que la menue paille est extraite sous la forme d'un boudin dans une direction d'extraction, l'appareil comportant en outre :
- des moyens de déroulement d'un film continu tout autour du boudin pendant son extraction ;
- un berceau pour recevoir le boudin filmé et séparer périodiquement le boudin en botte par la translation du berceau ; et
- des moyens de fermeture pour serrer le film entre la botte séparée et l'avant du boudin, réaliser deux liaisons sur le film et sectionner le film entre les deux liaisons.

Un tel appareil est apte à mettre en oeuvre le procédé décrit précédemment.

De manière avantageuse, l'appareil comporte des moyens de fixation à la moissonneuse. Il peut ainsi être embarqué pendant le travail de récolte et récupérer la menue paille directement depuis la moissonneuse-batteuse et la conditionner.

De manière particulière, les moyens de fixation comportent une attache par joint tournant sur une roue de la moissonneuse-batteuse dans son axe. Ce moyen de fixation permet de placer l'appareil sur le côté de la moissonneuse batteuse. Une telle position latérale évite que l'appareil roule sur l'andain de paille formé derrière la moissonneuse-batteuse, ce qui serait un risque avec un appareil traîné.

De manière complémentaire, les moyens de fixation comportent une attache arrière destinée à être fixée sur un attelage. L'attelage est généralement prévu à l'arrière des moissonneuses-batteuses. Les moyens de fixation arrière permettent ainsi de relier en maintenant une orientation fixe de l'appareil par rapport à la moissonneuse-batteuse en combinaison avec l'attache par joint tournant.

Selon un perfectionnement, l'appareil comporte au moins une roue avant à axe fixe au niveau de l'axe de roue. La roue permet de reprendre une bonne partie du poids de l'appareil, sans trop solliciter le joint tournant. Comme elle est au niveau de l'axe de roue de la moissonneuse-batteuse, il n'est pas nécessaire de la rendre orientable puisqu'elle est toujours orientée selon la direction de la moissonneuse.

De manière complémentaire, il comporte au moins une roue auto-orientable. Cette roue reprend également une partie du poids de l'appareil. Le fait qu'elle soit auto-orientable permet de la placer librement à un endroit qui est judicieux pour la reprise du poids et qui ne gêne pas les autres fonctions de l'appareil.

Selon une disposition constructive, l'appareil comporte une cuve conique recevant la menue paille de la moissonneuse-batteuse, et une vis sans fin conique montée rotative dans la cuve pour former un premier étage de compression de la menue paille. La cuve sert de réservoir tampon recevant la menue-paille ainsi que d'auxiliaire pour le premier étage de compression.

Selon une autre disposition constructive, l'appareil comporte un piston dans le tube de compression mobile entre une position reculée et une position avancée, le tube comportant une ouverture en communication avec la cuve pour recevoir la menue paille partiellement compressée, l'ouverture étant à l'avant d'une face avant du piston lorsque celui-ci est en position reculée. La menue paille est ainsi introduite dans le tube de compression lorsque le piston est reculé, puis compressée par l'avancement du piston.

De manière complémentaire, le tube de compression comporte des moyens de retenue. Ainsi, le boudin pincé par le resserrement et retenu à l'encontre du mouvement d'avancement du piston. La menue paille introduite dans le tube de compression est alors comprimée entre la face avant du piston et le boudin qui est retenu à l'extrémité du tube de compression par le resserrement.

Selon un perfectionnement, l'appareil comporte un tube d'alimentation destiné à être relié à la moissonneuse-batteuse pour transporter par soufflage la menue paille. En général, la moissonneuse-batteuse fournit la menue-paille en soufflage, par exemple dans le but de la disperser. Le tube d'alimentation est alors suffisant pour capter et transporter la menue paille jusqu'à l'appareil, par exemple dans la cuve.

Selon une disposition constructive, lequel les moyens de déroulement comportent au moins un dérouleur du film en rouleau et des moyens de conformation du film en tube autour du boudin. Le stockage du film en rouleau est très compact. Les moyen de conformation guide le film déroulé et lui confère la forme cylindrique souhaitée.

Selon une caractéristique avantageuse, l'appareil comporte un groupe hydraulique autonome pour fournir de l'énergie aux organes mobiles. La fourniture de l'énergie n'est alors pas tributaire des capacités de la moissonneuse-batteuse. De plus aucun travail de connexion de l'énergie n'est nécessaire.

De manière particulière, l'attache arrière est portée par un bras pivotant entre une position de travail dans laquelle l'attache arrière est reliée à la moissonneuse-batteuse et une position de rangement. L'encombrement est ainsi limité lors du transport et du stockage de l'appareil.

Selon un perfectionnement, l'appareil comporte des connecteurs latéraux pour être fixé pour le transport sur la moissonneuse-batteuse à la place de la barre de coupe. La barre de coupe nécessite en général d'être déposée sur un chariot pour le transport. La place est donc disponible pour y placer l'appareil à ce moment.

Selon un autre perfectionnement, l'appareil comporte au moins une béquille. La stabilité de l'appareil est assurée pendant les opérations de montage et de démontage de l'appareil sur la moissonneuse-batteuse.

Selon une disposition constructive, un ensemble mobile comprenant la roue auto-orientable, le bras et le berceau est apte à coulisser vers une position de transport limitant l'encombrement dans la direction d'extraction. Cet ensemble peut aussi comprendre la béquille.

### Brève description des figures

L'invention sera mieux comprise et d'autres particularités et avantages apparaîtront à la lecture de la description qui va suivre, la description faisant référence aux dessins annexés parmi lesquels :
- la figure 1 est une vue en perspective d'une moissonneuse-batteuse équipée d'un appareil conforme à un mode de réalisation de l'invention ;
- les figures 2 et 3 sont des vues en perspective de l'appareil seul de la figure 1 ;
- les figures 4 et 5 sont des vues de côtés respectivement opposés de l'appareil de la figure 2 ;
- la figure 6 est une vue similaire à la figure 5, mais en coupe selon un axe d'un tube de compression ;
- la figure 7 est une vue en perspective de la moissonneuse-batteuse portant l'appareil à l'avant pour le transport ;
- la figure 8 est une vue de détail de l'ensemble noueur.

### DESCRIPTION DETAILLEE

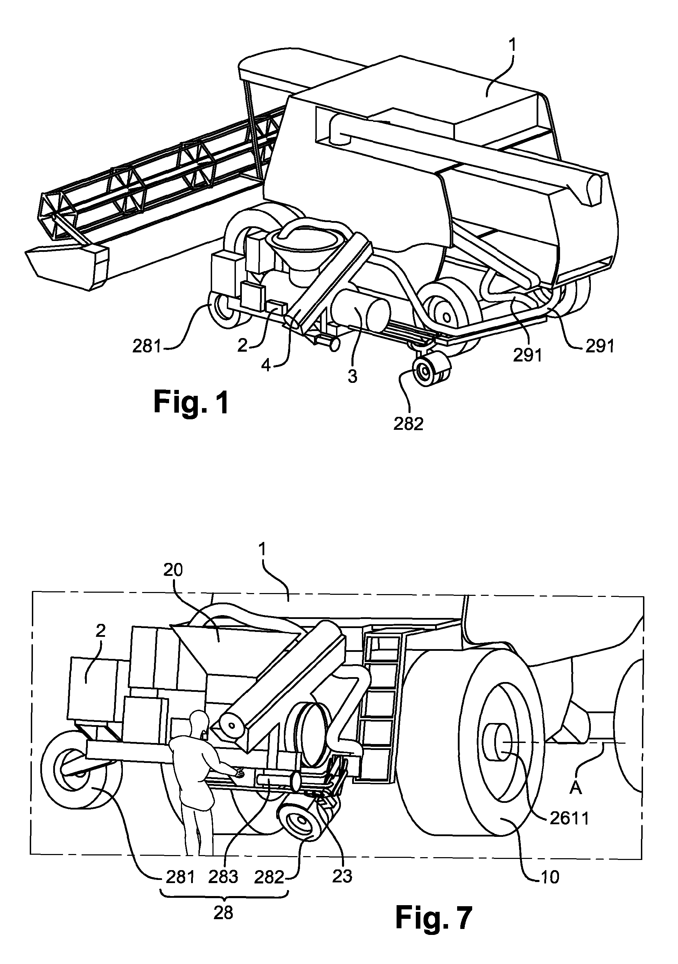

Une moissonneuse-batteuse 1 équipée d'un appareil 2 de conditionnement de la menue paille est montré sur la figure 1. L'appareil 2 est placé sur le côté gauche de la moissonneuse-batteuse 1 et s'étend sensiblement parallèlement à celle-ci.

L'appareil 2 comporte :
- des moyens de réception 20 de la menue paille depuis une moissonneuse-batteuse 1 ayant la forme d'une cuve conique dont la pointe est orientée vers le bas ;
- des moyens de compression 21 pour comprimer la menue paille dans un tube de compression 211 et l'extraire hors du tube de compression 211 sous la forme d'un boudin 3 dans une direction d'extraction C ;
- des moyens de déroulement 40 d'un film 4 continu tout autour du boudin 3 pendant son extraction ;
- un berceau 23 pour recevoir le boudin 3 filmé et séparer périodiquement le boudin 3 en botte 30 par la translation du berceau 23 ;
- des moyens de fermeture 24 pour serrer le film 4 entre la botte 30 séparée et l'avant du boudin 3, réaliser deux liaisons sur le film 4 et sectionner le film 4 entre les deux liaisons ; et
- un groupe hydraulique 25 autonome pour fournir de l'énergie aux organes mobiles.

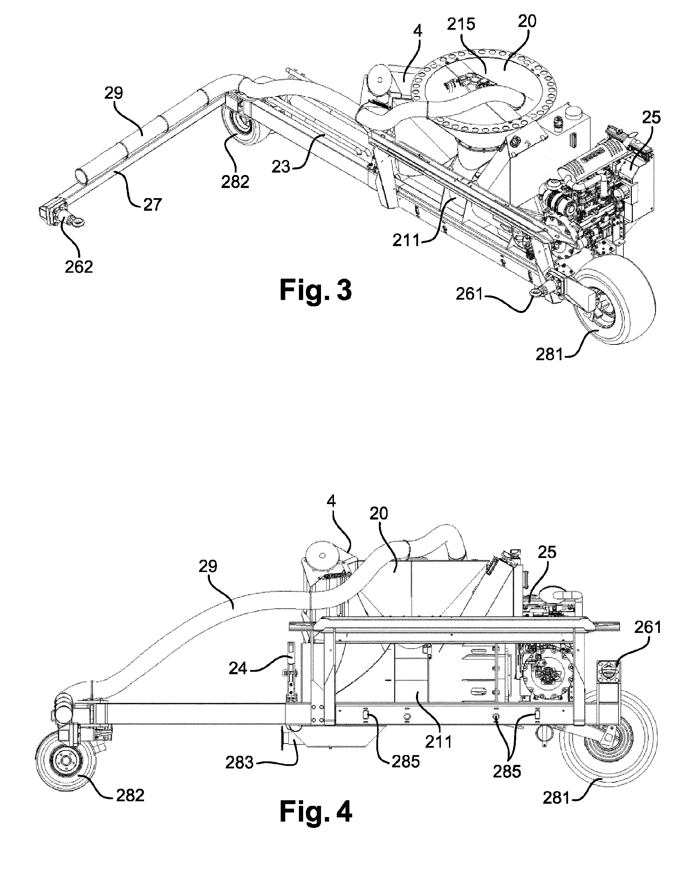

L'appareil 2 comporte en outre des moyens de fixation 26 à la moissonneuse-batteuse 1 qui comportent d'une part une attache par joint tournant 261 sur une roue 10 de la moissonneuse-batteuse 1 dans son axe, et d'autre part une attache arrière 262 destinée à être fixée sur un attelage 11 de la moissonneuse-batteuse 1. L'attache arrière 262 est portée par un bras 27 pivotant entre une position de travail dans laquelle l'attache arrière 262 est reliée à la moissonneuse-batteuse 1, comme montré sur les figures 1 à 6, et une position de rangement, comme montré sur la figure 7. L'attache par joint tournant 261 comporte un premier élément 2611 fixé sur la roue 10 avant gauche de la moissonneuse-batteuse 1, qui donc tourne avec la roue 10, et un deuxième élément 2612 lié à l'appareil 2 et en liaison rotative selon l'axe de la roue avec le premier élément 2611. Le premier et le deuxième élément 2611, 2612 sont détachables afin de pouvoir attacher ou séparer l'appareil 2 de la moissonneuse-batteuse 1.

L'appareil 2 comporte en outre des moyens de liaison au sol 28 comprenant une roue avant à axe fixe 281 au niveau de l'axe de roue A, c'est-à-dire que son axe est dans le même plan vertical que l'axe de roue A de la moissonneuse-batteuse 1, et une roue auto-orientable 282 plus en arrière par rapport à la roue avant 281. Par ailleurs, il est prévu une béquille 283 escamotable permettant d'assurer la stabilité de l'appareil 2 lorsqu'il est déposé au sol et détaché de la moissonneuse-batteuse 1.

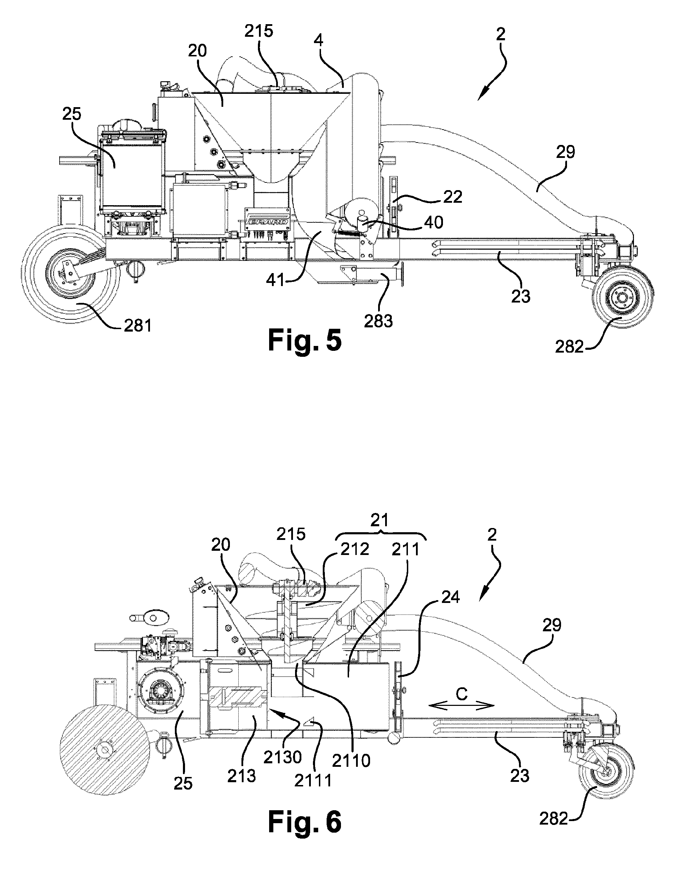

L'appareil 2 comporte un tube d'alimentation 29 destiné à être relié à la moissonneuse-batteuse 1 pour transporter par soufflage la menue paille jusque dans la cuve 20 conique. Le tube d'alimentation 29 comporte par exemple deux branches 291 pour se connecter de part et d'autre de l'éparpilleur. Les moyens de compression 21 comportent une vis sans fin 212 conique montée rotative dans la cuve 20 pour former un premier étage de compression de la menue paille. La vis sans fin est actionnée sur commande par un moteur hydraulique 215. Les moyens de compression 21 comportent en outre un piston 213 dans le tube de compression 211, mobile entre une position reculée et une position avancée. Le tube de compression 211 comporte une ouverture 2110 en communication avec la cuve 20 pour recevoir la menue paille partiellement compressée par la vis sans fin 212. L'ouverture 2110 est à l'avant d'une face avant 2130 du piston 213 lorsque celui-ci est en position reculée, comme montré sur la figure 6, et est entièrement obturée par le piston 213 lorsque celui-ci est en position avancée. Le tube de compression 211 comporte des moyens de retenue 2111 pour limiter l'expansion du boudin en direction du piston. Les moyens de retenue ont la forme de dents faisant saillie dans le tube de compression 211.

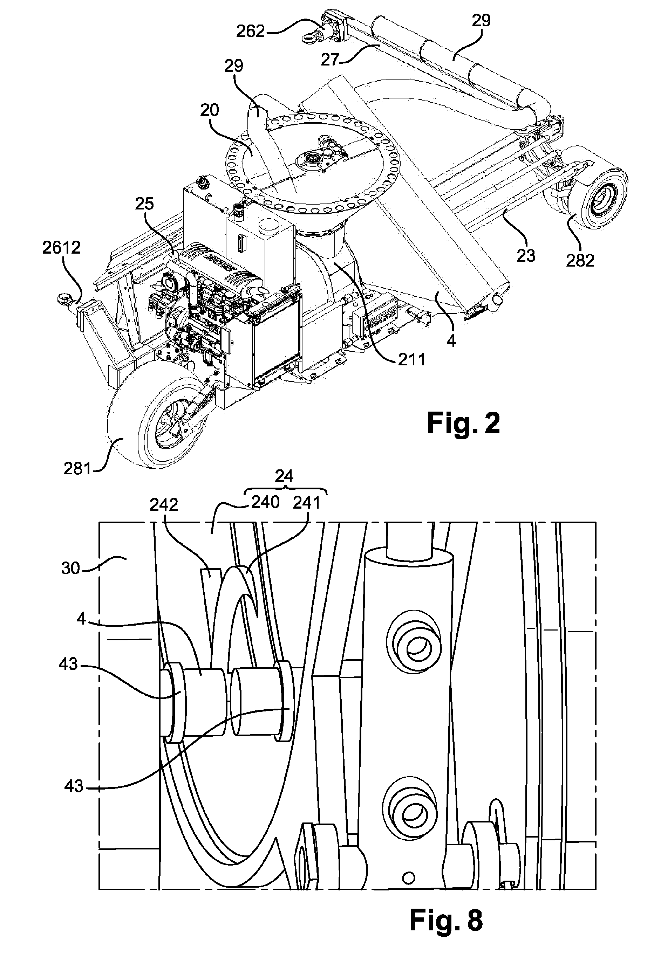

L'appareil 2 comporte un dérouleur 40 du film 4 en rouleau et des moyens de conformation 41 du film 4 en tube autour du boudin 3. Le lé du film est entouré autour du boudin avec un recouvrement des lisières du film. Il comporte également des moyens de fermeture sous la forme d'un ensemble noueur 24 permettant de réaliser la fermeture du film 4 aux extrémités de chaque botte 30 par des liaisons. Pour cela, l'ensemble noueur 24 comporte un anneau placé de manière coaxiale au boudin 3 et une lame mobile 241 placée dans une fente 242 de l'anneau. L'anneau 240 sert à déployer deux ligatures autour du film 4, à serrer les ligatures sur le film 4 de manière l'enlacer et à effectuer un noeud fermant la ligature. La lame mobile 242 est actionnable pour séparer le film 4 entre les deux ligatures, comme le montre la figure 8.

L'appareil 2 comporte en outre des connecteurs latéraux 285 pour être fixé pour le transport sur la moissonneuse-batteuse 1 à la place de la barre de coupe, comme montré sur la figure 7.

L'appareil 2 comporte en outre un ensemble mobile comprenant la roue auto-orientable 282, le bras 27 et le berceau 23. L'ensemble mobile est apte à coulisser vers une position de transport limitant l'encombrement dans la direction d'extraction C, comme montré sur la figure 7. Le mouvement est par exemple fourni par un vérin hydraulique. La roue auto-orientable 282 peut également être pivotée autour d'un axe longitudinal de manière à la relever.

Pour la mise en place de l'appareil 2 tenu initialement par une moissonneuse-batteuse 1 à l'emplacement de la barre de coupe, on commence par déployer l'ensemble mobile, la roue orientable 282 et la béquille 283, puis on pose l'appareil 2 au sol et on le détache de la moissonneuse-batteuse 1. On déploie le bras 27. On manoeuvre la moissonneuse-batteuse 1 pour placer l'appareil 2 le long du côté de la moissonneuse-batteuse 1, de manière à attacher le bras 27 à l'attelage 11 arrière de la moissonneuse-batteuse 1. On relève la béquille 283. On recule la moissonneuse-batteuse 1 de manière à rapprocher l'avant de l'appareil 2 du joint tournant 261 sur la roue avant 10, puis on réalise la connexion. On réalise la connexion du tube d'alimentation 29 au niveau de l'éparpilleur. Le tube est soutenu par le bras 27.

En fonctionnement, la menue paille est soufflée par l'éparpilleur et transférée par le tube d'alimentation 29 dans la cuve 20. L'air s'échappe par le haut, par exemple à travers un grillage ou une toile ajourée qui recouvre la cuve 20. Le piston 213 étant en position reculée, la vis sans fin 212 est actionnée pour compresser la menue paille vers le tube de compression 211. On atteint une compression d'un facteur supérieur à 5, voir supérieur à 10. Lorsque le tube de compression 211 est suffisamment rempli, la vis sans fin 212 s'arrête et le piston 213 passe en position avancée, de manière à comprimer la menue paille nouvellement insérée dans le tube de compression 211 contre le boudin 3 déjà amorcé dans le tube et retenu par le resserrement du tube. Le piston 213 revient en position reculée, libérant ainsi un espace dans le tube de compression 211 pour y recevoir à nouveau de la menue paille depuis la cuve 20. La vis sans fin 212 est à nouveau actionnée par le moteur hydraulique 2111. Le boudin est empêché de s'expanser en direction du piston par les moyens de retenue 2111.

Le boudin 3 est ainsi poussé par le piston 213 hors du tube de compression. Il est reçu par le berceau 23 sur lequel il glisse. Il entraîne le déroulement du film 4. Lorsque le boudin 3 est suffisamment long, on commande l'avance du berceau 23 de sorte à séparer le boudin 3 au niveau du débouché du tube de compression. Le berceau 23 porte alors une botte 30. L'ensemble noueur 24 est actionné pour resserrer le film 4 autour de l'extrémité du boudin 3 qui sort du tube et celle de la botte 30. Le film 4 est alors ligaturé avec deux ligatures, et on actionne la lame afin de séparer le film 4 entre les deux ligatures 43. Le boudin 3 continue à sortir par intermittence, en poussant à chaque fois la botte 30, jusqu'à ce qu'elle chute du berceau 23 sur le champ. Un nouveau cycle commence.

L'appareil 2 peut être commandé par un système d'asservissement, non détaillé ici, qu'il soit fondé sur des organes mécaniques, hydrauliques électriques ou électroniques, exclusivement ou en combinaison.

Le démontage de l'appareil 2 est réalisé par les opérations en ordre inverse de celles du montage.

Les bottes réalisées ont par exemple un diamètre compris entre 500 et 800 mm, d'une longueur comprise entre 1000 et 2500 mm et ont une masse de plusieurs centaines de kilogrammes. La densité est par exemple comprise entre 100 et 300 kg/m³.

## Revendications

1. Procédé de conditionnement de menue paille comportant les étapes suivantes :
• réception de la menue paille depuis une moissonneuse-batteuse (1) ;
• compression de la menue paille dans un tube de compression (211) ;
**caractérisé en ce qu'**il comporte en outre les étapes supplémentaires suivantes :
• extraction hors du tube d'un boudin (3) formé par la menue paille comprimée dans une direction d'extraction ;
• déroulement d'un film (4) continu tout autour du boudin (3) pendant son extraction ;
• réception du boudin (3) filmé sur un berceau (23) ;
• séparation périodique du boudin (3) en botte (30) par la translation du berceau (23) ;
• serrement du film (4) entre la botte (30) séparée et l'avant du boudin (3),
• réalisation de deux liaisons sur le film (4) et sectionnement du film (4) entre les deux liaisons.

2. Procédé selon la revendication 1, selon lequel on comprime la menue paille en deux étages, un premier étage avec une vis sans fin 212 conique, et un deuxième étage par un piston (213) coulissant de manière alternative dans le tube de compression (211).

3. Appareil de conditionnement de menue paille, comportant :
• des moyens de réception (20) de la menue paille depuis une moissonneuse-batteuse (1) ;
• des moyens de compression 21 pour comprimer la menue paille dans un tube de compression (211) et l'extraire hors du tube de compression (211) ;
**caractérisé en ce que**:
• la menue paille est extraite sous la forme d'un boudin (3) dans une direction d'extraction ;
• l'appareil (2) comportant en outre des moyens de déroulement (40) d'un film (4) continu tout autour du boudin (3) pendant son extraction ;
• un berceau (23) pour recevoir le boudin (3) filmé et séparer périodiquement le boudin (3) en botte (30) par la translation du berceau (23) ; et
• des moyens de fermeture (24) pour serrer le film (4) entre la botte (30) séparée et l'avant du boudin (3), réaliser deux liaisons sur le film (4) et sectionner le film (4) entre les deux liaisons.

4. Appareil (2) selon la revendication 3, **caractérisé en ce qu'**il comporte des moyens de fixation (26) à la moissonneuse.

5. Appareil selon la revendication 4, dans lequel les moyens de fixation (26) comportent une attache par joint tournant (261) sur une roue de la moissonneuse-batteuse (1) dans son axe.

6. Appareil selon la revendication 4 ou 5, dans lequel les moyens de fixation (26) comportent une attache arrière (262) destinée à être fixée sur un attelage (11).

7. Appareil selon la revendication 5, **caractérisé en ce qu'**il comporte au moins une roue avant à axe fixe (281) au niveau de l'axe de roue.

8. Appareil selon l'une des revendications 3 à 7, **caractérisé en ce qu'**il comporte au moins une roue auto-orientable (282).

9. Appareil selon l'une des revendications 3 à 8, **caractérisé en ce qu'**il comporte une cuve (20) conique recevant la menue paille de la moissonneuse-batteuse (1), et une vis sans fin (212) conique montée rotative dans la cuve (20) pour former un premier étage de compression de la menue paille.

10. Appareil selon la revendication 9, **caractérisé en ce qu'**il comporte un piston (213) dans le tube de compression (211) mobile entre une position reculée et une position avancée, le tube comportant une ouverture (2110) en communication avec la cuve (20) pour recevoir la menue paille partiellement compressée, l'ouverture (2110) étant à l'avant d'une face avant du piston (213) lorsque celui-ci est en position reculée.

11. Appareil selon l'une des revendications 3 à 10, dans lequel le tube de compression (211) comporte des moyens de retenue (2111).

12. Appareil selon l'une des revendications 3 à 11, **caractérisé en ce qu'**il comporte un tube d'alimentation (29) destiné à être relié à la moissonneuse-batteuse (1) pour transporter par soufflage la menue paille.

13. Appareil selon l'une des revendications 3 à 12, dans lequel les moyens de déroulement (40) comportent au moins un dérouleur du film (4) en rouleau et des moyens de conformation du film (4) en tube autour du boudin (3).

14. Appareil selon l'une des revendications 3 à 13, **caractérisé en ce qu'**il comporte un groupe hydraulique (25) autonome pour fournir de l'énergie aux organes mobiles.

15. Appareil selon la revendication 6, dans lequel l'attache arrière (262) est portée par un bras (27) pivotant entre une position de travail dans laquelle l'attache arrière (262) est reliée à la moissonneuse-batteuse (1) et une position de rangement.

16. Appareil selon l'une des revendications 3 à 15, **caractérisé en ce qu'**il comporte des connecteurs latéraux pour être fixé pour le transport sur la moissonneuse-batteuse (1) à la place de la barre de coupe.

17. Appareil selon l'une des revendications 3 à 16, **caractérisé en ce qu'**il comporte au moins une béquille (283).

18. Appareil selon l'une des revendications 3 à 17, dans lequel un ensemble mobile comprenant la roue auto-orientable (282), le bras (27) et le berceau (23) est apte à coulisser vers une position de transport limitant l'encombrement dans la direction d'extraction (C).
